# EUROPÄISCHE PATENTANMELDUNG

(11) **EP 3 893 602 A1**
(43) Veröffentlichungstag der Anmeldung: **13.10.2021**
(21) Anmeldenummer: 21165566.7
(22) Anmeldetag: 29.03.2021
(51) Int. Cl.: H05B 6/12, H02J 50/10, A47J 36/32

(54) **INDUKTIVES KÜCHENSYSTEM**

(30) Priorität: 06.04.2020 DE 102020109480
(71) Anmelder: Miele & Cie. KG, 33332 Gütersloh (DE)
(72) Erfinder: Müller, Christoph, 32289 Rödinghausen (DE); Gering, Nils Marius, 33739 Bielefeld (DE)

(57) **Zusammenfassung**

Die Erfindung betrifft ein induktives Küchensystem (1, 2) mit einem induktiven Kochfeld (1) mit wenigstens einer Kochstelle (11) mit wenigstens einem ersten Induktionselement (13) und mit wenigstens einem Küchengeschirr (2) mit wenigstens einem elektrischen Energiespeicher (25), welcher ausgebildet ist, wenigstens ein elektronisches Element (22-24) des Küchengeschirrs (2) elektrisch zu versorgen, wobei das erste Induktionselement (13) der Kochstelle (11) ausgebildet ist, das Küchengeschirr (2) induktiv zu beheizen. Das induktive Küchensystem (1, 2) ist dadurch gekennzeichnet, dass die Kochstelle (11) wenigstens ein zweites Induktionselement (14) aufweist, das Küchengeschirr (2) wenigstens ein Induktionselement (27) aufweist, das induktive Kochfeld (1) ausgebildet ist, das erste Induktionselement (13) der Kochstelle (11) derart zu betreiben, dass das auf der Kochstelle (11) befindliche Küchengeschirr (2) beheizt werden kann, und das Induktive Kochfeld (1) ferner ausgebildet ist, das zweite Induktionselement (14) der Kochstelle (11) derart zu betreiben, dass der elektrische Energiespeicher (25) des auf der Kochstelle (11) befindlichen Küchengeschirrs (2) mittels dessen Induktionselement (27) induktiv aufgeladen werden kann.

## Beschreibung

Die Erfindung betrifft ein induktives Küchensystem gemäß dem Oberbegriff des Patentanspruchs 1, ein induktives Kochfeld zur Verwendung in einem derartigen induktiven Küchensystem gemäß dem Patentanspruch 13 sowie ein Küchengeschirr zur Verwendung in einem derartigen induktiven Küchensystem gemäß dem Patentanspruch 14.

Der Trend beim heimischen Kochen geht immer weiter dahin, die Durchführung der Kochprozesse für den Benutzer einfacher, komfortabler und bzw. oder sicherer hinsichtlich des gewünschten Kochergebnisses zu gestalten. Hierzu ist es seit längerem bekannt, Temperatursensoren im Kochfeld zu verwenden, um insbesondere für jede Kochstelle eine Restwärme nach einem durchgeführten Garprozess dort ermitteln und dem Benutzer als Warnung anzeigen zu können.

Ein Garprozess bzw. ein Kochprozess kann auch dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Die Druckschrift EP 2 361 538 A1 betrifft eine thermoelektrisch-energieerzeugende, elektronisch temperaturmessende Pfanne mit einer Halbleiterkühlschicht umfassend einen Pfannenkörper, einen Pfannenstiel, welcher am Pfannenkörper angebracht ist, ein thermoelektrisches Energieerzeugungssystem und ein Temperaturmesssystem, wobei das thermoelektrische Energieerzeugungssystem durch Verbinden der Halbleiterkühlschicht, einer aufwärtsregelnden elektronischen Komponente und einer Stromspeichervorrichtung in Serie ausgebildet ist, wobei eine Oberfläche der Halbleiterkühlschicht sich in Kontakt mit dem Pfannenkörper befindet und die andere Oberfläche mit einer Hitzeableitvorrichtung verbunden ist. Das Temperaturmesssystem ist konfiguriert, um die Temperatur eines Bodens des Pfannenkörpers zu messen. Das thermoelektrische Energieerzeugungssystem ist mit dem Temperaturmesssystem verbunden, um elektrische Energie an das Temperaturmesssystem zu liefern.

Nachteilig ist hierbei, dass eine thermoelektrische Energieerzeugung, d.h. die Wandlung von Wärme in Elektrizität z.B. mittels des Seebeck-Effekts, technisch einen nicht unerheblichen Aufwand bedeuten kann, welcher zu entsprechenden Kosten in der Herstellung und bzw. oder in der Montage führen sowie auch zusätzlichen Bauraum benötigen kann.

Die Druckschrift EP 1 280 443 A1 betrifft ein elektronisches Bratpfannensystem mit einer Pfanne zum Bereiten von Speisen bzw. Lebensmitteln, mit einem Griff, der zur Bewegung bzw. Manipulation der Pfanne mit der Pfanne verbunden ist, mit einem oder mit mehreren Temperatursensoren, die mit der Pfanne verbunden sind, um Signale zu erzeugen, die eine Pfannencharakteristik bzw. mehrere Pfannencharakteristika angeben und mit einer Anzeigeelektronik, die mit den Sensoren verbunden ist und in bzw. mit dem Griff vorgesehen ist, um wenigstens eine Angabe bzw. Anzeige der Pfannencharakteristika einem Benutzer der Pfanne zur Verfügung zu stellen, wobei die Anzeigeelektronik eine Benutzerschnittstelle zum Auswählen einer von mehreren Speisencharakteristika umfasst. Zur Versorgung der elektronischen Elemente mit elektrischer Energie weist das elektronische Bratpfannensystem im Griff eine auswechselbare Batterie als elektrischen Energiespeicher auf.

Die Druckschrift DE 10 2008 051 265 A1 betrifft ein Gargerät, insbesondere einen Schnellkochtopf, mit einer Steuerungs-, Regelungs- und Bedienvorrichtung mit zumindest einer Sensoreinrichtung zur Erfassung von zumindest einem, einen Garvorgang beeinflussenden Parameter, mit zumindest einem Mikrokontroller zur Datenverarbeitung und Steuerung/Regelung von Garprozessen, mit zumindest einem Datenspeicher zum Speichern von Ablaufprogrammen, von Geräteparametern auch umgebender für den Garprozess relevanter Geräte, von Garguttypen und Garguttypenparametern und zur Dokumentation von Garprozessen für eine spätere Auswertung und Optimierung derselben, mit zumindest einer Datenschnittstelleneinrichtung, mit zumindest einem elektrischen Energiespeicher zur Energieversorgung, mit zumindest einer Kopplungseinrichtung zur lösbaren Verbindung der Steuerungs-, Regelungs- und Bedienvorrichtung mit dem Gargerät, mit zumindest einer Ausgabeeinrichtung zur Information eines Benutzers, und mit zumindest einer Eingabeeinrichtung zur Bedienung der Steuerungs-, Regelungs- und Bedienvorrichtung.

Die Stromversorgung der Steuerungs-, Regelungs- und Bedienvorrichtung kann beispielsweise durch eine Batterie, durch ein Thermoelement, durch induktive Kopplung wie z. B. im Falle eines Induktionsherdes oder durch einen Akku gewährleistet werden. Im Falle der Verwendung eines Akkus kann die Aufladung über eine Datenschnittstelleneinrichtung des Gargeräts, so z. B. über eine stromführende Leitung eines USB-Anschlusses, oder optional in einer separaten Ladestation vorgenommen werden.

Nachteilig ist bei der Verwendung einer Batterie, dass die gespeicherte elektrische Energie der auswechselbaren Batterie endlich ist und durch den bestimmungsgemäßen Betrieb des elektronischen Bratpfannensystems verbraucht wird. Ab einem gewissen niedrigen Maß an gespeicherter elektrischer Energie bzw. bei ausreichend verbrauchtem bzw. entleertem auswechselbaren elektrischen Energiespeicher können die elektronischen Funktionen des elektronischen Bratpfannensystems der Druckschrift EP 1 280 443 A1 bzw. des Gargeräts der Druckschrift DE 10 2008 051 265 A1 somit nicht mehr betrieben und vom Benutzer genutzt werden. Hierzu muss der Benutzer die leere Batterie gegen eine ausreichend aufgeladene Batterie austauschen, was Aufwand bedeuten und Zeit sowie Geld für die Anschaffung der Batterie kosten kann.

Nachteilig ist bei der Verwendung eines Akku als elektrischen Energiespeicher bei der Steuerungs-, Regelungs- und Bedienvorrichtung der Druckschrift DE 10 2008 051 265 A1, dass auch dieser vom Benutzer wieder aufzuladen ist, falls die gespeicherte elektrische Energie verbraucht ist. Dies kann für den Benutzer einen lästigen Aufwand bedeuten.

Nachteilist ist bei der Verwendung eines Akku oder einer auswechselbaren Batterie als elektrischer Energiespeicher allgemein, dass die elektronischen Funktionen des elektronischen Bratpfannensystems der Druckschrift EP 1 280 443 A1 bzw. des Gargeräts der Druckschrift DE 10 2008 051 265 A1 solange nicht dem Benutzer zur Verfügung stehen, bis die Batterie ausgetauscht bzw. der Akku ausreichend aufgeladen ist. Dies kann die Verfügbarkeit einschränken.

Nachteilig ist auch im Fall der Steuerungs-, Regelungs- und Bedienvorrichtung der Druckschrift DE 10 2008 051 265 A1, dass eine thermoelektrische Energieerzeugung vergleichbar der Pfanne der Druckschrift EP 2 361 538 A1 technisch aufwendig und entsprechend teuer sein kann.

Nachteilig ist bei der induktiven Kopplung eines Induktionsherdes gemäß der Druckschrift DE 10 2008 051 265 A1, dass das Gargerät ausgebildet sein muss, induktiv elektrische Energie zum Betrieb der elektronischen Elemente zu erhalten. Auch muss der Induktionsherd entsprechend ausgebildet sein. Dies kann einen nicht unerheblichen Aufwand darstellen. Ferner können nur geeignete Induktionsherde und Gargeschirre miteinander hierzu verwendet werden. Auch kann die induktive Energieversorgung lediglich beim induktiven Beheizen des Gargeschirrs zum direkten Betreiben der elektronischen Elemente der Steuerungs-, Regelungs- und Bedienvorrichtung der Druckschrift
DE 10 2008 051 265 A1 verwendet werden.

Die Versorgung eines Küchengeschirrs mittels induktiver Kopplung mit elektrischer Energie ist auch aus den Druckschriften WO 2014/056786 A1 und WO 2010/080738 A1 und US 2012/0000903 A1 bekannt, bei denen eine Spule zur Aufnahme des elektrischen Wechselfeldes entweder vollständig im metallischen Bodenkörper des Küchengeschirrs angeordnet ist oder vollständig außerhalb des metallischen Bodenkörpers, beispielswesie in einem Griff des Küchengeschirrs angeordnet ist.

Mit anderen Worten erfordern die Bedienkonzepte derartiger Koch-, Küchen- bzw. Gargeschirre mit integrierten elektronischen Elementen, dass z.B. ein EIN/AUS-Sensor ständig in Bereitschaft ist, um eine Eingabe eines Benutzers zu detektieren. Dieses bedingt wiederum, das ein elektrischer dauerhafter oder auswechselbarer Energiespeicher z.B. im Kochgeschirrgriff des Gargeschirrs eingebaut wird, welcher die Elektronik bzw. die elektronischen Elemente mit elektrischer Energie versorgt, um z.B. die Touchsensorik durchgängig in Bereitschaft zu halten.

Als ein derartiger elektrischer Energiespeicher wird ein Kurzzeitenergiespeicher wie z.B. ein Kondensator, welcher z.B. in einen Kochgeschirrgriff integriert werden kann, die erforderliche elektrische Energie zum Betrieb der elektronischen Elemente üblicherweise nicht in ausreichendem Maße dauerhaft zur Verfügung stellen können. Daher werden üblicherweise elektrische Energiespeicher wie Batterien oder Akkus wie zuvor beschrieben verwendet, welche immerhin einen Betrieb über mehrere Tage und ggfs. einige Wochen mit einer typischen täglichen Benutzungsdauer für ein derartiges Gargeschirr ermöglichen können.

Ist der elektrische Energiespeicher leer, muss vor einer weiteren Benutzung des Gargeschirrs z.B. in Form eines Systemkochgeschirrs dieser vom Benutzer als Batterie ersetzt bzw. als Akku aufgeladen werden. Kann dieses nicht durchgeführt werden, weil z.B. die verwendete handelsübliche Batterie nicht spontan zu Verfügung steht oder Spezialbatterien erst beim Hersteller bestellt werden müssen bzw. der Aufladevorgang des Akkus erst abgewartet werden muss, ist nur ein manueller herkömmlicher Betrieb des Gargeschirrs, als Systemgargeschirr ggfs. mit Steuerung über das Kochfeld, möglich. Dadurch ist z.B. keine Anwahl von Assistenzfunktionen und dergleichen am Gargeschirr möglich. Ggfs. vorhandene Sicherheitsfunktionen des Gargeschirrs wie z.B. eine im Hintergrund immer aktive Sicherheitsfunktion zur Begrenzung der maximalen Temperatur des Gargeschirrs können ebenfalls in diesem Fall nicht genutzt werden.

Werden die elektronischen Elemente des Gargeschirrs vom Induktionsherd induktiv elektrisch versorgt, so ist dies lediglich während des Betriebs des Induktionsherds möglich. Eine Speisung der elektronischen Elemente des Gargeschirrs außerhalb des Garbetriebs ist nicht möglich, weshalb die Funktionen der elektronischen Elemente des Gargeschirrs dann nicht zur Verfügung stehen. Ist dies, wie zuvor beschrieben, gewollt, so ist ein elektrischer Energiespeicher zu verwenden, mit welchem jedoch die zuvor beschriebenen Nachteile einhergehen.

Der Erfindung stellt sich somit das Problem, ein induktives Küchensystem der eingangs beschriebenen Art bereitzustellen, so dass die elektronischen Elemente des Küchengeschirrs jederzeit betriebsbereit sind bzw. die Funktionen der elektronischen Elemente des Küchengeschirrs jederzeit zur Verfügung stehen. Insbesondere soll das Wechseln von Batterie vermieden und bzw. oder das Aufladen von Akkus für den Benutzer vereinfacht werden. Zumindest soll eine Alternative zu bekannten derartigen induktiven Küchensystemen geschaffen werden.

Erfindungsgemäß wird dieses Problem durch ein induktives Küchensystem mit den Merkmalen des Patentanspruchs 1, durch ein induktives Kochfeld mit den Merkmalen des Patentanspruchs 13 sowie durch ein Küchengeschirr mit den Merkmalen des Patentanspruchs 14 gelöst. Vorteilhafte Ausgestaltungen und Weiterbildungen der Erfindung ergeben sich aus den nachfolgenden Unteransprüchen.

Somit betrifft die Erfindung ein induktives Küchensystem mit einem induktiven Kochfeld mit wenigstens einer Kochstelle mit wenigstens einem ersten Induktionselement und mit wenigstens einem Küchengeschirr mit wenigstens einem elektrischen Energiespeicher, welcher ausgebildet ist, wenigstens ein elektronisches Element des Küchengeschirrs elektrisch zu versorgen, wobei das erste Induktionselement der Kochstelle ausgebildet ist, das Küchengeschirr induktiv zu beheizen. Das Küchengeschirr kann jede Art von Küchengeschirren sein, welche in einer Küche zur Zubereitung, zu dessen Vorbereitung und bzw. oder zur Lagerung von Lebensmittels sowie zum Anrichten zubereiteter Lebensmittel verwendet werden können. Dies können insbesondere Kochtöpfe, Schmortöpfe, Bratpfannen und dergleichen sein. Der elektrische Energiespeicher ist ein aufladbarer bzw. ein wiederaufladbarer elektrischer Energiespeicher wie z.B. ein Kondensator oder ein Akku, wie weiter unten noch näher beschrieben werden wird. Die elektronischen Elemente des Küchengeschirrs können z.B. Sensoren, Anzeige- und bzw. oder Bedienelemente, Steuerungselemente und dergleichen sein.

Das erfindungsgemäße induktive Küchensystem ist dadurch gekennzeichnet, dass die Kochstelle wenigstens ein zweites Induktionselement aufweist, das Küchengeschirr wenigstens ein Induktionselement aufweist, das induktive Kochfeld ausgebildet ist, das erste Induktionselement der Kochstelle derart zu betreiben, dass das auf der Kochstelle befindliche Küchengeschirr beheizt werden kann, und das induktive Kochfeld ferner ausgebildet ist, das zweite Induktionselement der Kochstelle derart zu betreiben, dass der elektrische Energiespeicher des auf der Kochstelle befindlichen Küchengeschirrs mittels dessen Induktionselement induktiv aufgeladen werden kann. Die Induktionselemente können insbesondere Induktionsspulen sein, welche als Leistungsspule und als Ladespule bezeichnet werden können.

Mit anderen Worten kann erfindungsgemäß ein Aufladen bzw. ein Wiederaufladen des elektrischen Energiespeichers des Küchengeschirrs durch das induktive Kochfeld erfolgen. Vorteilhaft ist hierbei, dass auf zusätzliche Aufladegeräte verzichtet werden kann. Auch kann auf das Auswechseln eines verbrauchten elektrischen Energiespeichers wie z.B. einer Batterie verzichtet werden. Dies kann den Komfort für den Benutzer erhöhen. Auch kann dies die Verfügbarkeit des Küchengeschirrs bzw. dessen elektronischer Funktionen erhöhen.

Der Erfindung liegt dabei die Erkenntnis zugrunde, dass bisher die elektronischen Elemente eines Küchengeschirrs entweder mit elektrischer Energie betrieben werden, welche in einem elektrischen Energiespeicher gespeichert ist oder in diesem Moment induktiv von dem induktiven Kochfeld in das Küchengeschirr eingekoppelt und direkt verwendet wird. Dies schränkt diese Möglichkeit ein, da nicht in jedem Betriebszustand des induktiven Kochfelds induktiv elektrische Energie zur Verfügung gestellt werden kann. So kann eine Kochstelle eines induktiven Kochfelds bisher entweder induktiv elektrische Energie zur Verfügung stellen, um Funktionen des Küchengeschirrs betreiben zu können, oder das Küchengeschirr kann von dem induktiven Kochfeld induktiv beheizt werden; in diesem Moment bzw. in diesem Betriebszustand stehen dann die Funktionen der elektronischen Elemente des Küchengeschirrs jedoch nicht zur Verfügung.

Erfindungsgemäß wird daher ein zusätzliches zweites Induktionselement seitens des induktiven Kochfelds verwendet, um unabhängig von dem ersten Induktionselement, welches dem induktiven Beheizen des Küchengeschirrs dient, zusätzlich die Möglichkeit eines induktiven Aufladens des elektrischen Energiespeichers des Küchengeschirrs vorzusehen.

Das Beheizen mittels des ersten Induktionselements, welches auch als Leistungsspule bezeichnet werden kann, und das Aufladen mittels des zweiten Induktionselements, welches auch als Ladespule bezeichnet werden kann, kann parallel, d.h. zeitgleich, oder alternativ, d.h. zeitlich versetzt, erfolgen, wobei das induktive Kochfeld ausgebildet sein kann, beide Möglichkeiten vorzusehen.

Die ersten Induktionselemente sind eingerichtet und vorgesehen zur induktiven Erwärmung eines Küchengeschirrs, insbesondere eines ferromagnetischen Bodens eines Küchengeschirrs. Die zweiten Induktionselemente sind eingerichtet und vorgesehen als Sensoren zur Erkennung der Anwesenheit eines Küchengeschirrs und/oder erfindungsgemäß vorgesehen und eingerichtet zur induktiven Übertragung elektrischer Energie an das Küchengeschirr, insbesondere an ein Induktionselement des Küchengeschirrs.

Ein Aspekt ist, dass ein induktives Erwärmen des Küchengeschirrs mittels der zweiten Induktionselemente nicht möglich ist. Die zweiten Induktionselemente sind weder vorgesehen noch eingerichtet oder ausgeführt eine induktive Erwärmung eines ferromagnetischen Bodens des Küchengeschirrs zu bewirken.

Ausschließlich die ersten Induktionselemente sind vorgesehen zum Erwärmen des Küchengeschirrs.

Auch kann zusätzlich eine direkte Versorgung der elektronischen Elemente des Küchengeschirrs mittels des zweiten Induktionselements der Kochstelle erfolgen, d.h. neben dem Aufladen kann zusätzlich ein direkter Betrieb der elektronischen Elemente des Küchengeschirrs ermöglicht werden, um die gespeicherte elektrische Energie nicht zu verbrauchen. Dabei kann überschüssige elektrische Energie, welche nicht zum direkten Betreiben der elektronischen Elemente des Küchengeschirrs erforderlich ist, im elektrischen Energiespeicher gespeichert werden.

Ein Aspekt ist es, dass die induktive Kopplung zur Übertragung elektrischer Energie von dem Kochfeld an das Küchengeschirr nur mittels den zweiten Induktionselementen und dem Induktionselement des Küchengeschirrs erfolgt.

Ein Aspekt ist es, dass das Küchengeschirr einen Filter zwischen dem Induktionselement des Küchengeschirrs und der Elektronik des Küchengeschirrs aufweist, welches nur die Frequenzen des zweiten Induktionselements durchlässt. Hierdurch wird erreicht, dass das Energie durch induktive Kopplung nur mittels der zweiten Induktionselemente an das Küchengeschirr übertragen wird. Hierdurch wird eine Überlastung der Elektronik des Küchengeschirrs vermieden, ohne die Zeiten für eine induktive Energieübertragung zu sehr zu verkürzen.

Vorteilhaft ist somit, dass die Funktion des Aufladens des elektrischen Energiespeichers des Küchengeschirrs mittels des zweiten Induktionselements der Kochstelle unabhängig von der Technik des ersten Induktionselements realisiert werden kann. Mit anderen Worten kann die Ladefunktion des Küchengeschirrs unabhängig von der Induktionstechnologie der Kochstelle bzw. des induktiven Kochfelds umgesetzt werden. Insbesondere können die beiden Funktionen des induktiven Beheizens und des induktiven Aufladens technisch unabhängig von einander umgesetzt werden, was die Kosten reduzieren kann. Insbesondere kann eine derartige Funktionstrennung es ermöglichen, beide Induktionselemente der Kochstelle für den jeweiligen Zweck gezielt auszulegen bzw. zu optimieren.

Vorteilhaft ist dabei auch, dass durch den alleinigen Betrieb des zweiten Induktionselements der Kochstelle eine ungewollte zu hohe Leistungsabgabe seitens des ersten Induktionselements der Kochstelle sicher vermieden werden kann, da die beide Induktionselemente unabhängig voneinander betrieben werden können. Dies kann die Sicherheit der Verwendung des erfindungsgemäßen induktiven Küchensystems für den Benutzer erhöhen.

Die Induktionselemente weisen eine flächige Ausdehnung auf, welche parallel zur Aufstellfläche für das Küchengeschirr auf dem Kochfeld orientiert ist. Dabei haben die für die induktive Erwärmung des Küchengeschirrs vorgesehenen ersten Induktionselemente eine deutlich größere flächige Ausdehnung als die als Sensoren und/oder als Energieüberträger mittels induktiver Kopplung vorgesehenen zweiten Induktionselemente. Dies hat den Vorteil, dass einerseits mittels möglichst großen ersten Induktionselementen eine gute Flächenabdeckung mit den ersten Induktionselementen und somit eine wirksame Erwärmung des Küchengeschirrs ermöglicht wird. Andererseits können gerade die möglichst kleinen zweiten Induktionselemente gut in Zwischenräumen zwischen benachbarten ersten Induktionselementen beziehungsweise um die ersten Induktionselemente herum angeordnet werden, ohne die Flächenwirksamkeit der ersten Induktionselemente wesentlich zu beeinträchtigen.

Ein Aspekt ist es, dass die ersten Induktionselemente einen mittleren Durchmesser von wenigstens 8 Zentimeter und/oder parallel zur Aufstellfläche des Kochfeldes eine Ausdehnung von wenigstens 50 Quadratzentimeter aufweisen. Weiterhin hat es sich als vorteilhaft erwiesen, dass die zweiten Induktionselemente einen mittleren Durchmesser von höchstens 5 Zentimeter und/oder parallel zur Aufstellfläche des Kochfeldes eine Ausdehnung von maximal 20 Quadratzentimeter aufweisen.

Eine Ausführungsform eines Kochfeldes sieht vor, dass die mittlere Überdeckungsfläche aller ersten Induktionselemente mindestens doppelt, vorzugsweise wenigstens dreifach so groß ist wie die Überdeckungsfläche des größten zweiten Induktionselementes. Der Begriff Überdeckungsfläche ist ein Synonym für die flächige Ausdehnung parallel zur Aufstellfläche des Kochfeldes.

Gemäß einem Aspekt der Erfindung können bei einem Kochfeld die ersten Induktionselemente unterschiedliche Größen aufweisen. Die zweiten Induktionselemente sind vorzugsweise hinsichtlich ihrer Größe, insbesondere hinsichtlich ihrer flächigen Ausdehnung parallel zur Aufstellfläche des Kochfeldes, identisch ausgeführt sind.

Zu bedenken ist auch, dass der Trend dahin geht, die Kochfelder optisch immer weiter aus der Küche verschwinden zu lassen. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Küchen- bzw. Kochgeschirre zu verlagern. Dann kann erfindungsgemäß das induktive Kochfeld auch als sog. vollintegrierter Lösungsansatz in eine Küchenarbeitsplatte oder in eine sonstige Fläche eingebracht werden, ohne als induktives Kochfeld optisch nach oben hin in Erscheinung zu treten. Mit anderen Worten kann wenigstens die eine Kochstelle mit ihren beiden Induktionselementen unter der z.B. Arbeitsplatte der Küchenzeile in entsprechende gefräste Aussparungen für Induktionselemente eingebracht werden, so dass auf eine separate Abdeckung z.B. in Form einer Glasplatte wie bisher bekannt verzichtet werden kann. Somit sind von einem erfindungsgemäßen induktiven Kochfeld auch derartige vollintegrierte induktive Kochfelder umfasst.

Hierbei kann der Fall eintreten, dass bei derartigen vollintegrierten Kochfeldern bei Küchenzeilen mit z.B. keramischen Arbeitsplatten diese nicht resistent gegen hohe Temperaturen von z.B. größer als 200°C bei einem zu schnellem Aufheizen und bzw. oder bei einem zu schnellem Abkühlen sein können. Z.B. aus diesem Grund kann es vorteilhaft sein, eine Erkennung und Identifizierung der verwendeten Küchengeschirre z.B. über ein sog. Paring durchzuführen. Hierdurch kann ggfs. sichergestellt werden, das nur zulässige Systemküchengeschirre in einem zulässigem Rahmen, d.h. durch die Begrenzung z.B. der maximalen Temperatur oder der maximalen Temperaturveränderung pro Zeiteinheit des Küchengeschirrs z.B. seitens einer Steuerungseinheit des induktiven Kochfelds, auf dem vollintegrierten induktiven Kochfeld betrieben werden. Denkbar ist dabei, dass je nach Oberflächenmaterial der Arbeitsplatte unterschiedliche Koch- und Bratmodi zugelassen werden, z.B. nur Warmhalten, Kochen, Braten, Frittieren, etc., oder aber auch nur das zuvor beschriebene induktive Aufladen des Systemküchenargeschirrs.

Beispielsweise kann über ein Pairing die Position eines smarten Systemküchengeschirrs auf einer der Kochstellen eines induktiven Kochfelds abgeleitet werden. Denkbar ist, dieses Pairing zu erweitern, um eine Identifikation des zulässigen Betriebsmodus wie z.B. nur Warmhalten, Kochen, Braten, Frittieren, etc. zu erhalten. Alternativ kann ein zusätzlicher Datenaustausch zwischen dem induktiven Kochfeld und dem Systemküchengeschirr eingeführt werden, welcher als Kommunikation des zulässigen Betriebsmodus über das smarte Systemküchengeschirr an die Verfahrenstechnik des induktiven Kochfeldes wie z.B. an dessen Steuerungseinheit dienen kann.

Daher kann es erforderlich oder zumindest wünschenswert sein, dass Informationen zwischen dem Küchen- bzw. Kochgeschirr und dem induktiven Kochfeld einseitig oder beidseitig ausgetauscht werden können. Dies kann die Übermittlung von Anweisungen sowie von Messgrößen enthalten. Dieser Datenaustausch kann seitens des induktiven Kochfelds mittels dessen ersten Induktionselements und bzw. oder mittels dessen zweiten Induktionselements erfolgen.

Vorzugsweise kann z.B. in eine Ablage eines Küchenschranks wie z.B. eines Topfschranks oder in die Arbeitsplatte einer Küchenzeile ein Induktionselement als Ladeeinheit für ein smartes Systemküchengeschirr eingebracht werden. Denkbar ist auch, dass diese Ladeeinheit z.B. in Anti-Rutschmatten in Küchenschränken vorgesrüstet ist oder nachgerüstet werden kann. Die Ladeeinheit kann dabei über einen eigenen Netzanschluss verfügen, um die nötige Energie bereitstellen zu können. Ergänzt um die zuvor beschriebene Funktion eines Pairing bzw. eines Datenaustausches kann diese Ladeeinheit eindeutig als zulässiges Zubehör eines induktiven Küchensystems indentifiziert werden.

Gemäß einem Aspekt der Erfindung ist das induktive Kochfeld ferner ausgebildet, das erste Induktionselement der Kochstelle zum Beheizen des auf der Kochstelle befindlichen Küchengeschirrs parallel zum induktiven Aufladen des elektrischen Energiespeichers des Küchengeschirrs mittels dessen Induktionselement durch das zweite Induktionselement der Kochstelle zu betreiben. Dies kann ein induktives Aufladen des elektrischen Energiespeichers des Küchengeschirrs während des Beheizens des Küchengeschirrs ermöglichen. Dies kann Zeit sparen, die sonst zur alleinigen Durchführung des Aufladevorgangs verwendet werden müsste.

Gemäß einem weiteren Aspekt der Erfindung ist das induktive Kochfeld ferner ausgebildet, das erste Induktionselement der Kochstelle zum Beheizen des auf der Kochstelle befindlichen Küchengeschirrs alternativ zum induktiven Aufladen des elektrischen Energiespeichers des Küchengeschirrs mittels dessen Induktionselement durch das zweite Induktionselement der Kochstelle zu betreiben. Dies kann beide Funktionen voneinander trennen. Insbesondere kann die Erwärmung der Kochstelle reduziert werden.

Insbesondere sind die zweiten Induktionselemente nicht vorgesehen, eingerichtet und/oder geeignet das Küchengeschirr induktiv zu erwärmen. Die hat seine Ursache in der Größe der zweiten Induktionselemente und/oder in der Frequenz mit welcher die zweiten Induktionselemente betrieben werden und/oder in der Leistung welche die zweiten Induktionselemente abgeben.

Gemäß einem weiteren Aspekt der Erfindung weist das induktive Kochfeld ferner einen ersten Generator auf, welcher ausgebildet ist, das erste Induktionselement mit einer niedrigen Frequenz, insbesondere unter 500 kHz, beispielsweise zwischen ca. 15 kHz und ca. 100 kHz zu betreiben. Insbesondere in diesem Frequenzbereich kann eine wirksame induktive Beheizung erfolgen.

Gemäß einem weiteren Aspekt der Erfindung weist das induktive Kochfeld ferner einen zweiten Generator auf, welcher ausgebildet ist, das zweite Induktionselement mit einer hohen Frequenz, insbesondere über 50 kHz, vorzugsweise mit einer Frequenz zwischen ca. 50 kHz und ca. 10 MHz zu betreiben. Es hat sich herausgestellt, dass in diesem Frequenzband eine Ladespule in einem Küchengeschirr besonders gut angesprochen werden kann. Besonders bevorzugt ist die Frequenz zwischen 80 kHz und 240 kHz oder zwischen 480 kHz und 1 MHz oder zwischen 3 MHz und 6MHz. Insbesondere in diesen Frequenzbereichen kann eine wirksame induktive Aufladung erfolgen.

Ein Aspekt ist es, dass das erste Induktionselement mit einer niedrigen Frequenz betrieben wird, welche geringer ist als eine hohen Frequenz, mit der das zweite Induktionselement betrieben wird. Eine mögliche Ausführungsform sieht vor, dass der Wert der hohen Frequenz mindestens doppelt so groß ist wie der Wert der niedrigen Frequenz.

Gemäß einem weiteren Aspekt der Erfindung ist das Küchengeschirr ferner ausgebildet, wenigstens ein elektronisches Element mittels seines Induktionselements elektrisch direkt zu versorgen. Hierdurch kann das Aufladen zusätzlich zum direkten Betreiben der elektronischen Elemente des Küchengeschirrs erfolgen. Auch kann ein alleiniges direktes Betreiben der elektronischen Elemente des Küchengeschirrs erfolgen, z.B. falls der elektrische Energiespeicher des Küchengeschirrs vollständig geladen ist.

Gemäß einem weiteren Aspekt der Erfindung ist der elektrische Energiespeicher des Küchengeschirrs ein Kurzzeitenergiespeicher, vorzugsweise ein Kondensator, und das induktive Kochfeld ist ausgebildet, das zweite Induktionselement, vorzugsweise wiederholend, kurzzeitig mit einer ausreichend hohen elektrischen Leistung zu betreiben, so dass der elektrische Energiespeicher des auf der Kochstelle befindlichen Küchengeschirrs mittels dessen Induktionselement induktiv aufgeladen werden kann. Dies kann die Umsetzung der Erfindung vereinfachen und bzw. oder den Aufwand, die Kosten und bzw. oder den Bauraum für den elektrischen Energiespeicher geringhalten.

Gemäß einem weiteren Aspekt der Erfindung ist der elektrische Energiespeicher des Küchengeschirrs ein Langzeitenergiespeicher, vorzugsweise ein Akku, und das induktive Kochfeld ist ausgebildet, das zweite Induktionselement ausreichend lang mit einer ausreichend hohen elektrischen Leistung zu betreiben, so dass der elektrische Energiespeicher des auf der Kochstelle befindlichen Küchengeschirrs mittels dessen Induktionselement induktiv aufgeladen werden kann. Dies kann die Anzahl und bzw. die Dauer der Aufladevorgänge geringhalten und bzw. oder die Verfügbarkeit der Funktionen der elektronischen Elemente des Küchengeschirrs erhöhen.

Gemäß einem weiteren Aspekt der Erfindung ist bzw. sind das induktive Kochfeld und bzw. oder das Küchengeschirr ausgebildet, einen Benutzer auf einen laufenden Aufladevorgang des elektrischen Energiespeichers des Küchengeschirrs hinzuweisen. Dies kann durch optische, akustische und bzw. oder haptische Mittel erfolgen. Auch kann eine derartige Information seitens des induktiven Kochfelds und bzw. oder seitens des Küchengeschirrs an ein Mobilgerät des Benutzers wie z.B. an ein Smartphone übertragen und dort dem Benutzer optisch, akustisch und bzw. oder haptisch mitgeteilt werden. In jedem Fall kann dies den Benutzer darüber informieren bzw. daran erinnern, dass ein Aufladevorgang zwischen induktivem Kochfeld und Küchengeschirr durchgeführt wird, damit der Benutzer nicht versehentlich das Küchengeschirr von dem Induktionselement entfernt und hierdurch das Aufladen unterbricht oder beendet.

Gemäß einem weiteren Aspekt der Erfindung ist das Küchengeschirr ausgebildet, den Ladezustand des elektrischen Energiespeichers zu bestimmen und einem Benutzer mitzuteilen. Dies kann durch optische, akustische und bzw. oder haptische Mittel erfolgen. Auch kann eine derartige Information seitens des Küchengeschirrs an das induktive Kochfeld und bzw. oder an ein Mobilgerät des Benutzers wie z.B. an ein Smartphone übertragen und dort dem Benutzer optisch, akustisch und bzw. oder haptisch mitgeteilt werden. In jedem Fall kann der Benutzer auf diese Art und Weise über den aktuellen Ladezustand des Küchengeschirrs auf dem Laufenden gehalten werden.

Gemäß einem weiteren Aspekt der Erfindung ist das induktive Kochfeld ausgebildet, das erste Induktionselement der Kochstelle und bzw. oder das zweite Induktionselement der Kochstelle derart zu betreiben, dass ein wenigstens einseitiger, vorzugsweise ein beidseitiger, Datenaustausch mit dem auf der Kochstelle befindlichen Küchengeschirr ausgeführt werden kann. Ein derartiger Datenaustausch kann wenigstens ein Pairing, wie zuvor beschrieben, umfassen. Dabei kann ein Datenaustausch lediglich in einer Richtung von dem induktiven Kochfeld zum Küchengeschirr oder in der umgekehrten Richtung erfolgen, was für manche Funktionen ausreichend sein und den Aufwand hierfür geringhalten kann. Ein Datenaustausch in beide Richtungen kann die Möglichkeiten erhöhen, welche sich aus den ausgetauschten Daten ergeben können, jedoch auch den technischen Aufwand hierfür erhöhen.

Gemäß einem weiteren Aspekt der Erfindung ist das induktive Kochfeld ausgebildet, das erste Induktionselement der Kochstelle derart zu betreiben, dass das auf der Kochstelle befindliche Küchengeschirr beheizt werden kann, und das Induktive Kochfeld ist ferner ausgebildet, das zweite Induktionselement der Kochstelle parallel derart zu betreiben, dass der elektrische Energiespeicher des auf der Kochstelle befindlichen Küchengeschirrs mittels dessen Induktionselement induktiv aufgeladen oder ein wenigstens einseitiger, vorzugsweise ein beidseitiger, Datenaustausch mit dem auf der Kochstelle befindlichen Küchengeschirr ausgeführt werden kann. Auf diese Weise können die zuvor beschriebenen Funktionen einer induktiven Aufladung oder eines Datenaustausch seitens des zweiten Induktionselements parallel, d.h. zeitgleich, zu einem induktiven Beheizen des Küchengeschirrs mittels des ersten Induktionselements ausgeführt werden. Dies kann Zeit sparen und bzw. oder die Möglichkeiten der Verwendung des erfindungsgemäßen induktiven Küchensystems erhöhen.

Die Erfindung betrifft auch ein induktives Kochfeld zur Verwendung in einem induktiven Küchensystem wie zuvor beschrieben. Somit kann ein induktives Kochfeld zur Verfügung gestellt werden, um das zuvor beschriebene erfindungsgemäße induktive Küchensystem umzusetzen.

Die Erfindung betrifft auch ein Küchengeschirr, vorzugsweise ein Gargeschirr, zur Verwendung in einem induktiven Küchensystem wie zuvor beschrieben. Somit kann ein Küchengeschirr wie z.B. ein Kochtopf, ein Schmortopf, ein Bratpfannen und dergleichen zur Verfügung gestellt werden, um das zuvor beschriebene erfindungsgemäße induktive Küchensystem umzusetzen.

Gemäß einem Aspekt der Erfindung ist das Küchengeschirr ausgebildet, einen vorbestimmt geringen Ladezustand des elektrischen Energiespeichers zu erkennen und in Reaktion hierauf wenigstens einen entsprechenden Hinweis an einen Benutzer auszugeben. Dies kann durch optische, akustische und bzw. oder haptische Mittel erfolgen. Auch kann eine derartige Information seitens des Küchengeschirrs an das induktive Kochfeld und bzw. oder an ein Mobilgerät des Benutzers wie z.B. an ein Smartphone übertragen und dort dem Benutzer optisch, akustisch und bzw. oder haptisch mitgeteilt werden. In jedem Fall kann dies dafür sorgen, dass das Aufladen des Küchengeschirrs rechtzeitig vom Benutzer vorgenommen wird, bevor der elektrische Energiespeicher des Küchengeschirr so weit entleert ist, dass die elektronischen Elemente des Küchengeschirrs nicht mehr betrieben werden können und somit vor der nächsten Nutzung der Funktionen der elektronischen Elemente des Küchengeschirrs ein Aufladen erfolgen muss, was die Nutzung verzögern und bzw. oder einschränken kann.

Ein Ausführungsbeispiel der Erfindung ist in den Zeichnungen rein schematisch dargestellt und wird nachfolgend näher beschrieben. Es zeigt
- Figur 1: eine schematische Draufsicht auf ein erfindungsgemäßes induktives Kochfeld; und
- Figur 2: eine schematische Darstellung eines erfindungsgemäßen induktiven Küchensystems von der Seite.

Die o.g. Figur wird in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

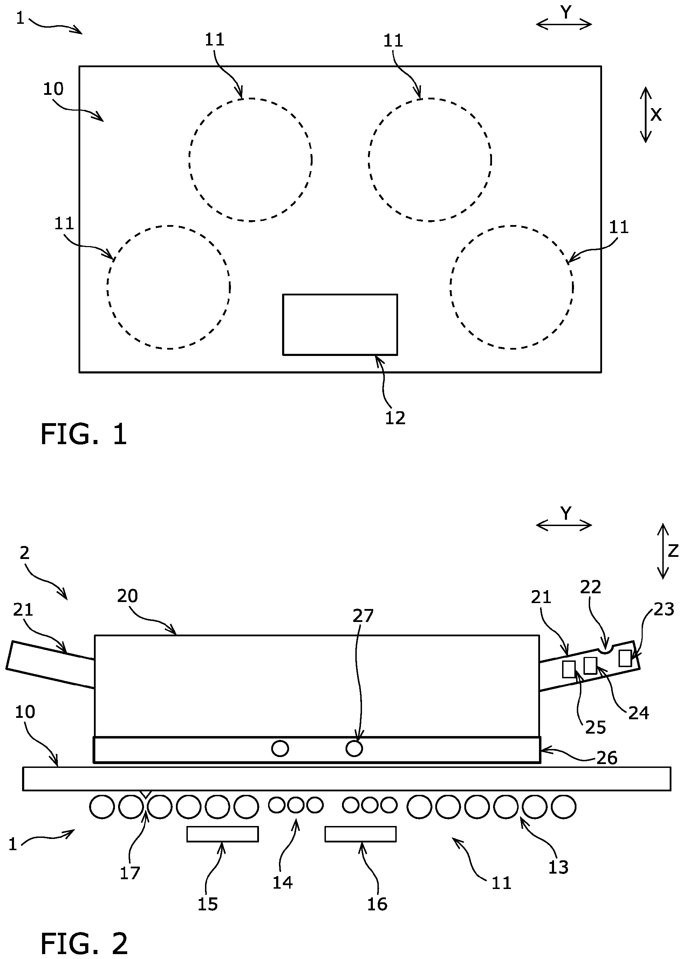

Figur 1 zeigt eine schematische Draufsicht auf ein erfindungsgemäßes induktives Kochfeld 1. Figur 2 zeigt eine schematische Darstellung eines induktiven Küchensystems 1, 2 von der Seite.

Das induktive Küchensystem 1, 2 besteht aus einem induktiven Kochfeld 1 sowie aus einem Küchengeschirr 2 in Form eines Gargeschirrs 2, welches beispielhaft als Topf 2 umgesetzt ist.

Das induktive Kochfeld 1 weist mehrere Kochstellen 11 auf, von denen lediglich eine Kochstelle 11 in der Figur 2 beispielhaft dargestellt ist. Das induktive Kochfeld 1 weist eine Abdeckung 10 in Form einer Glasplatte 10 auf, welche die Oberfläche des induktiven Kochfelds 1 bildet, auf welcher Gargeschirre 2 wie z.B. der Topf 2 auf den Kochstellen 11 abgestellt werden können. Das induktive Kochfeld 1 weist ein Anzeige-/Bedienelement 12 auf, so dass einem Benutzer Informationen angezeigt sowie vom Benutzer Eingaben getätigt werden können.

Unter jeder Kochstelle 11 des induktiven Kochfelds 1 ist ein erstes Induktionselement 13 als induktives Heizelement 13 vorgesehen, welches in diesem Fall eine erste Induktionsspule 13 ist. Die erste Induktionsspule 13 kann von einem ersten Generator 15 in einem Frequenzbereich zwischen ca. 15 kHz und ca. 100 kHz betrieben werden. Die erste Induktionsspule 13 kann auch als Leistungsspule 13 und der erste Generator 15 auch als Heizgenerator 15 bezeichnet werden.

Ferner weist jede Kochstelle 11 des induktiven Kochfelds 1 zusätzlich ein mittig und radial innerhalb der Maß der ersten Induktionsspule 13 angeordnetes zweites Induktionselement 14 auf, welches als induktives Ladeelement 14 in Form einer zweiten Induktionsspule 14 umgesetzt ist. Die zweite Induktionsspule 14 kann von einem zweiten Generator 16 in einem Frequenzbereich zwischen ca. 50 kHz und ca. 4 MHz betrieben werden. Die zweite Induktionsspule 14 kann auch als Ladespule 14 und der zweite Generator 16 auch als Ladegenerator 16 bezeichnet werden.

Eine Temperatur der Kochstelle 11 kann als Kochstellentemperatur mittels eines Temperatursensors 17 erfasst werden.

Das induktive Kochfeld 1 weist ferner eine Sende-/Empfangseinheit (nicht dargestellt) auf, welche dazu in der Lage ist, drahtlose Signale z.B. von dem Topf 2 zu empfangen sowie drahtlose Signale z.B. an den Topf 2 auszusenden. Die erste Induktionsspule 13, die zweite Induktionsspule 14, der erste Generator 15, der zweite Generator 16, der Temperatursensor 17 sowie die Sende-/Empfangseinheit sind signalübertragend mit einer Steuerungseinheit (nicht dargestellt) des induktiven Kochfelds 1 verbunden, welche Signale bzw. Daten verarbeiten, erzeugen sowie den ersten Generator 15, den zweiten Generator 16, den Temperatursensor 17 und die Sende-/Empfangseinheit betreiben bzw. steuern kann.

Der Topf 2 weist einen Küchengeschirrkörper 20 bzw. einen Gargeschirrkörper 20 als Topfkörper 20 auf, an welchem seitlich zwei Griffelemente 21 bzw. zwei Griffe 21 angeordnet sind. Der Topfkörper 20 bildet einen zylindrischen und flachen Boden 26 aus, mit welchem der Topf 2 auf der Kochstelle 11 des induktiven Kochfelds 1 aufgesetzt werden kann. Im Boden 26 des Topfkörpers 20 ist ein Temperatursensor (nicht dargestellt) vorgesehen, so dass eine Temperatur des Bodens 26 des Topfkörpers 20 an dieser Stelle als Gargeschirrtemperatur sensorisch erfasst werden kann.

Ein Griff 21 weist ein Anzeige-/Bedienelement 22 auf, welches wenigstens dem Herstellen bzw. dem Initialisieren eines Pairing des Topfes 2 mit dem induktiven Kochfeld 1 bzw. mit dessen Kochstelle 11 dient, beispielsweise in Form eines Ein/Aus-Sensors, wobei nach dessen Betätigung zum Einschalten ein Pairing initialisiert wird. Ferner weist der Griff 21 eine Sende-/Empfangseinheit 23 auf. Das Anzeige-/Bedienelement 22, das Sensorelement sowie die Sende-/Empfangseinheit 23 sind jeweils signalübertragend mit einer Steuerungseinheit 24 verbunden (nicht dargestellt). Das Anzeige-/Bedienelement 22, das Sensorelement, die Sende-/Empfangseinheit 23 sowie die Steuerungseinheit 24 stellen die elektronischen Elemente 22-24 des Topfes 2 dar.

Im Boden 26 des Topfkörpers 20 ist konzentrisch zum Mittelpunkt und bei bestimmungsgemäßer Verwendung der Kochstelle 11 zugewandt ein Induktionselement 27 in Form einer Induktionsspule 27 angeordnet. Die Induktionsspule 27 ist energieübertragend mit einem elektrischen Energiespeicher 25 verbunden, welcher in einem der beiden Griffe 21 angeordnet und seinerseits mit den elektronischen Elementen 22-24 des Topfes 2 energieübertragend verbunden ist sowie diese elektrisch speisen kann. Der elektrische Energiespeicher 25 kann z.B. als elektrischer Kurzzeitenergiespeicher 25 z.B. als Kondensator 25 oder als elektrischer Langzeitenergiespeicher 25 z.B. als Akku 25 ausgebildet sein.

Weist der Topf 2 einen Akku 25 auf, so können die Funktionen der elektronischen Elemente 22-24 des Topfes 2 vom Benutzer verwendet werden, solange ausreichend elektrische Energie im Akku 25 gespeichert ist. Neigt sich die gespeicherte elektrische Energie des Akku 25 dem Ende, so kann dies z.B. seitens der Steuerungseinheit 24 des Topfes 2 erkannt und eine entsprechende Mitteilung z.B. über das Anzeige-/Bedienelement 22 des Topfes 2 an den Benutzer ausgegeben werden.

Der Benutzer kann dann den Topf 2 auf die Kochstelle 11 des induktiven Kochfelds 1 stellen, so dass eine induktive Kopplung der zweiten Induktionsspule 14 der Kochstelle 11 und der Induktionsspule 27 des Topfes 2 erfolgen kann, welche den Akku 25 des Topfes 2 aufladen kann. Dies kann seitens des Benutzers manuell vorgenommen werden, indem der Benutzer eine entsprechende Funktion des induktiven Kochfelds 1 verwendet.

Dies kann auch selbsttätig seitens des induktiven Kochfelds 1 erfolgen, indem eine entsprechende Einstellung der Kochstelle 11 seitens der Steuerungseinheit des induktiven Kochfelds 1 vorgenommen wird. Dem selbstständigen induktiven Laden kann ggfs. eine selbsttätige Erkennung des Topfes 2 auf der Kochstelle 11 mittels eines sog. Pairing vorangehen, welche ggfs. auch eine konkrete Identifizierung der Art des Topfes 2 oder sogar eine konkrete Identifizierung genau des verwendeten Topfes 2 mittels eines beidseitigen Datenaustausches umfassen kann. In jedem Fall kann gleichzeitig ein Hinweis seitens des induktiven Kochfelds 1 und bzw. oder seitens des Topfes 2 z.B. über dessen Anzeige-/Bedienelement 22 an den Benutzer erfolgen, dass ein induktiver Aufladevorgang des Akku 25 des Topfes 2 vorgenommen wird.

Dies kann in einem Bereitschaftsmodus des induktiven Kochfelds 1 erfolgen, in welchem die erste Induktionsspule 13 der Kochstelle 11 inaktiv bleiben kann.

In einem separaten Betriebsmodus kann die erste Induktionsspule 13 der Kochstelle 1 seitens der Steuerungseinheit des induktiven Kochfelds 1 wie bisher bekannt zum induktiven Beheizen des Topfes 2 betrieben werden. Gleichzeitig kann die zweite Induktionsspule 14 der Kochstelle 11 keine Funktion ausüben oder parallel zum Beheizen des Topfes 2 dessen elektrischen Energiespeicher 25 wie zuvor beschrieben zusätzlich aufladen.

In jedem Fall einer induktiven Aufladung des elektrischen Energiespeichers 25 des Topfes 2 kann ein Teil der induktiv zur Verfügung gestellten elektrischen Energie auch zum Betrieb der elektronischen Elemente 22-24 des Topfes 2 verwendet werden. Auch können lediglich die elektronischen Elemente 22-24 des Topfes 2 induktiv gespeist werden, ohne dass gleichzeitig eine induktive Aufladung des elektrischen Energiespeichers 25 des Topfes 2 erfolgen muss.

### Bezugszeichenliste (Bestandteil der Beschreibung)

- X: Längsrichtung; Tiefe; Länge
- Y: Querrichtung; Breite
- Z: vertikale Richtung; Höhe

- 1: induktives Kochfeld
- 10: Abdeckung; Glasplatte
- 11: Kochstellen
- 12: Anzeige-/Bedienelement
- 13: erstes Induktionselement; erste Induktionsspule; induktives Heizelement; Leistungsspule
- 14: zweites Induktionselement; zweite Induktionsspule; induktives Ladeelement; Ladespule
- 15: erster Generator; Heizgenerator
- 16: zweiter Generator; Ladegenerator
- 17: Temperatursensor

- 2: Küchengeschirr; Gargeschirr; Topf
- 20: Küchengeschirrkörper; Gargeschirrkörper; Topfkörper
- 21: Griffelemente; Griffe
- 22: Anzeige-/Bedienelement
- 23: Sende-/Empfangseinheit
- 24: Steuerungseinheit
- 25: elektrischer (Kurzzeit-/Langzeit)Energiespeicher; Kondensator; Akku
- 26: Boden
- 27: Induktionselement; Induktionsspule; induktives Aufladeelement

## Patentansprüche

1. Induktives Küchensystem (1, 2)
mit einem induktiven Kochfeld (1) mit wenigstens einer Kochstelle (11) mit wenigstens einem ersten Induktionselement (13) und
mit wenigstens einem als Gargeschirr ausgeführtem Küchengeschirr (2), insbesondere Kochtopf, Schmortopf, Bratpfanne und dergleichen, mit wenigstens einem elektrischen Energiespeicher (25), welcher ausgebildet ist, wenigstens ein elektronisches Element (22-24) des Küchengeschirrs (2) elektrisch zu versorgen,
wobei das erste Induktionselement (13) der Kochstelle (11) ausgebildet ist, das Küchengeschirr (2) induktiv zu beheizen,
wobei das Küchengeschirr (2) wenigstens ein Induktionselement (27) aufweist,
**dadurch gekennzeichnet, dass**
die Kochstelle (11) wenigstens ein zweites Induktionselement (14) aufweist, welches weder dazu vorgesehen noch dazu eingerichtet sind ein auf dem Kochfeld (1) befindliches Küchengeschirr (2) induktiv zu beheizen,
das induktive Kochfeld (1) ausgebildet ist, das erste Induktionselement (13) der Kochstelle (11) derart zu betreiben, dass das auf der Kochstelle (11) befindliche Küchengeschirr (2) beheizt werden kann, und
das Induktive Kochfeld (1) ferner ausgebildet ist, das zweite Induktionselement (14) der Kochstelle (11) derart zu betreiben, dass der elektrische Energiespeicher (25) des auf der Kochstelle (11) befindlichen Küchengeschirrs (2) mittels dessen Induktionselement (27) induktiv aufgeladen werden kann.

2. Induktives Küchensystem (1, 2) nach Anspruch 1, **wobei**
das induktive Kochfeld (1) ferner ausgebildet ist, das erste Induktionselement (13) der Kochstelle (11) zum Beheizen des auf der Kochstelle (11) befindlichen Küchengeschirrs (2) parallel und/oder zeitgleich zum induktiven Aufladen des elektrischen Energiespeichers (25) des Küchengeschirrs (2) mittels dessen Induktionselement (27) durch das zweite Induktionselement (14) der Kochstelle (11) zu betreiben.

3. Induktives Küchensystem (1, 2) nach Anspruch 1 oder 2, **wobei** das induktive Kochfeld (1) ferner ausgebildet ist, das erste Induktionselement (13) der Kochstelle (11) zum Beheizen des auf der Kochstelle (11) befindlichen Küchengeschirrs (2) alternativ zum induktiven Aufladen des elektrischen Energiespeichers (25) des Küchengeschirrs (2) mittels dessen Induktionselement (27) durch das zweite Induktionselement (14) der Kochstelle (11) zu betreiben.

4. Induktives Küchensystem (1, 2) nach einem der vorangehenden Ansprüche, wobei
das induktive Kochfeld (1) ferner einen ersten Generator (15) aufweist, welcher ausgebildet ist, das erste Induktionselement (13) mit einer niedrigen Frequenz, insbesondere kleiner 200 kHz, vorzugsweise mit einer Frequenz zwischen ca. 15 kHz und ca. 100 kHz zu betreiben.

5. Induktives Küchensystem (1, 2) nach Anspruch 4, **wobei**
das induktive Kochfeld (1) ferner einen zweiten Generator (16) aufweist, welcher ausgebildet ist, das zweite Induktionselement (14) mit einer hohen Frequenz, insbesondere zwischen 50 kHZ und ca. 10 MHz zu betreiben.

6. Induktives Küchensystem (1, 2) nach einem der vorangehenden Ansprüche, wobei
der Wert der hohen Frequenz des zweiten Induktionselements größer ist als der Wert der niedrigen Frequenz des ersten Induktionselements.

7. Induktives Küchensystem (1, 2) nach einem der vorangehenden Ansprüche, wobei
die mittlere Überdeckungsfläche aller ersten Induktionselemente (12) mindestens doppelt so groß ist, vorzugsweise wenigstens dreifach so groß ist, wie die Überdeckungsfläche des größten der zweiten Induktionselemente (13).

8. Induktives Küchensystem (1, 2) nach einem der vorangehenden Ansprüche, **wobei**
das Küchengeschirr (2) ferner ausgebildet ist, wenigstens ein elektronisches Element (22-24) mittels seines Induktionselements (27) elektrisch direkt zu versorgen.

9. Induktives Küchensystem (1, 2) nach einem der vorangehenden Ansprüche, **wobei**
der elektrische Energiespeicher (25) des Küchengeschirrs (2) ein Kurzzeitenergiespeicher (25), vorzugsweise ein Kondensator (25), ist und
das induktive Kochfeld (1) ausgebildet ist, das zweite Induktionselement (14), vorzugsweise wiederholend, kurzzeitig mit einer ausreichend hohen elektrischen Leistung zu betreiben, so dass der elektrische Energiespeicher (25) des auf der Kochstelle (11) befindlichen Küchengeschirrs (2) mittels dessen Induktionselement (27) induktiv aufgeladen werden kann.

10. Induktives Küchensystem (1, 2) nach einem der Ansprüche 1 bis 8, **wobei**
der elektrische Energiespeicher (25) des Küchengeschirrs (2) ein Langzeitenergiespeicher (25), vorzugsweise ein Akku (25), ist und
das induktive Kochfeld (1) ausgebildet ist, das zweite Induktionselement (14) ausreichend lang mit einer ausreichend hohen elektrischen Leistung zu betreiben, so dass der elektrische Energiespeicher (25) des auf der Kochstelle (11) befindlichen Küchengeschirrs (2) mittels dessen Induktionselement (27) induktiv aufgeladen werden kann.

11. Induktives Küchensystem (1, 2) nach einem der vorangehenden Ansprüche, **wobei**
das induktive Kochfeld (1) ausgebildet ist, das erste Induktionselement (13) der Kochstelle (11) und/oder das zweite Induktionselement (14) der Kochstelle (11) derart zu betreiben, dass ein wenigstens einseitiger, vorzugsweise ein beidseitiger, Datenaustausch mit dem auf der Kochstelle (11) befindlichen Küchengeschirr (2) ausgeführt werden kann.

12. Induktives Küchensystem (1, 2) nach einem der vorangehenden Ansprüche, **wobei**
das induktive Kochfeld (1) ausgebildet ist, das erste Induktionselement (13) der Kochstelle (11) derart zu betreiben, dass das auf der Kochstelle (11) befindliche Küchengeschirr (2) beheizt werden kann, und
das Induktive Kochfeld (1) ferner ausgebildet ist, das zweite Induktionselement (14) der Kochstelle (11) parallel derart zu betreiben, dass
der elektrische Energiespeicher (25) des auf der Kochstelle (11) befindlichen Küchengeschirrs (2) mittels dessen Induktionselement (27) induktiv aufgeladen oder
ein wenigstens einseitiger, vorzugsweise ein beidseitiger, Datenaustausch mit dem auf der Kochstelle (11) befindlichen Küchengeschirr (2) ausgeführt werden kann.

13. Induktive Kochfeld (1) zur Verwendung in einem induktiven Küchensystem (1, 2) nach einem der Ansprüche 1 bis 12.

14. Küchengeschirr (2), vorzugsweise Gargeschirr (2), zur Verwendung in einem induktiven Küchensystem (1, 2) nach einem der Ansprüche 1 bis 12.

15. Küchengeschirr (2) nach Anspruch 14, wobei
das Küchengeschirr (2) ausgebildet ist, einen vorbestimmt geringen Ladezustand des elektrischen Energiespeichers (25) zu erkennen und in Reaktion hierauf wenigstens einen entsprechenden Hinweis an einen Benutzer auszugeben.
